# EUROPEAN PATENT APPLICATION

(11) **EP 4 692 608 A1**
(43) Date of publication of application: **11.02.2026**
(21) Application number: 25194453.4
(22) Date of filing: 06.08.2025
(51) Int. Cl.: F16K 3/26, F01D 25/18, F02C 7/06, F16K 31/122

(54) **SPOOL VALVE FOR AIRCRAFT ENGINE**

(30) Priority: 06.08.2024 US 202418795587
(71) Applicant: PRATT & WHITNEY CANADA CORP., Longueuil, Québec J4G 1A1 (CA)
(72) Inventor: PELLERIN, Hugues, (01BE5) Longueuil, J4G 1A1 (CA)
(74) Representative: Dehns

(57) **Abstract**

A valve (60; 360; 460) has: a housing (61; 461) defining an internal cavity circumscribed by a peripheral wall (61C) extending between a first end (61A) and a second end (61B) and having an outlet (600; 3600; 4600) and an inlet (60I); a spool (62; 162; 262; 362; 462) having a valving section (62A) sealingly engaged to the peripheral wall (61C) between the outlet (600; 3600; 4600) and the second end (61B), a guiding section (62B) sealingly engaged to the peripheral wall (61C) between the outlet (600; 3600; 4600) and the first end (61A), and an apertured section (62C) defining apertures (62D), the spool (62...462) moveable between: a closed position in which the valving section (62A) overlaps the outlet (600; 3600; 4600) and in which the spool (62...462) blocks fluid communication between the inlet (60I) and the outlet (600; 3600; 4600), and an open position in which the valving section (62A) is offset from the outlet (600; 3600; 4600) and in which the inlet (60I) is fluidly connected to the outlet (600; 3600; 4600) through the one or more apertures (62D) of the apertured section (62C) of the spool (62...462); and a biasing member (63) biasing the spool (62...462) to the closed position.

## Description

### TECHNICAL FIELD

The application relates generally to aircraft engines and, more particularly, to valves used in liquid systems, such as oil systems, of such engines.

### BACKGROUND

Aircraft engines have liquid systems, such as oil systems for flowing oil to different component in need of lubrication. This oil may also be used as a heat exchange fluid to heat up fuel before said fuel is used for combustion. Typically, these oil systems include valves that selectively allow or restrict an oil flow from an oil source to one or more components in need of oil. Although existing valves are satisfactory to some extend, improvements are sought.

### SUMMARY

In one embodiment of the present invention, there is provided a valve for a fluid system of an aircraft engine, comprising: a housing defining an internal cavity circumscribed by a peripheral wall extending along a longitudinal axis between a first end and a second end, the internal cavity having an outlet extending through the peripheral wall at a location intermediate between the first end and the second end, and an inlet at a location between the first end and the outlet; a spool movably received within the internal cavity for reciprocating movement along the longitudinal axis, the spool having a valving section sealingly engaged to the peripheral wall between the outlet and the second end, a guiding section sealingly engaged to the peripheral wall between the outlet and the first end, and an apertured section between the guiding section and the valving section, the apertured section defining one or more apertures, the spool moveable between: a closed position in which the valving section overlaps the outlet and in which the spool blocks fluid communication between the inlet and the outlet, and an open position in which the valving section is offset from the outlet and in which the inlet is fluidly connected to the outlet through the one or more apertures of the apertured section of the spool; and a biasing member biasing the spool to the closed position.

The valve described above may include any of the following features, in any combinations.

In some embodiments, the housing includes a sleeve, the peripheral wall defined by the sleeve, the spool sealingly engaged to the sleeve.

In some embodiments, the sleeve defines one or more sleeve apertures aligned with the outlet.

In some embodiments, a cap is removably secured to the peripheral wall of the housing at the second end of the internal cavity.

In some embodiments, an adjustment member is threadingly engaged to the peripheral wall of the housing and movable relative to the housing to vary a biasing force generated by the biasing member.

In some embodiments, the cap has an anti-rotation feature for preventing rotation of the adjustment member once the cap is mounted to the peripheral wall.

In some embodiments, the adjustment member has an aperture receiving a stem protruding from the cap, the anti-rotation feature defined by an inner face extending around the aperture and an outer face of the stem contacting each other and being non-cylindrical.

In some embodiments, the spool divides the internal cavity into a reference cavity between the outlet and the second end and an inlet cavity between the inlet and the outlet, the reference cavity fluidly connectable to a source of the fluid being at a reference pressure.

In some embodiments, the reference cavity is fluidly connected to the outlet via flow passages defined by the housing.

In some embodiments, the flow passages are defined either through a sleeve mounted to the peripheral wall or via slots interspaced between legs of the sleeve.

In some embodiments, the reference cavity is fluidly connected to the source of the fluid via a reference inlet defined by the housing.

In another aspect of the present invention, there is provided an aircraft engine, comprising: a compressor section; an oil system having an oil source fluidly connectable to a component, the component fluidly connected to the compressor section; and a valve for selectively fluidly connecting the oil source to the component, the valve having: a housing defining an internal cavity circumscribed by a peripheral wall extending along a longitudinal axis between a first end and a second end, the internal cavity having an outlet extending through the peripheral wall at a location intermediate between the first end and the second end, and an inlet at a location between the first end and the outlet, the internal cavity having a reference inlet fluidly connected to the compressor section; a spool movably received within the internal cavity for reciprocating movement along the longitudinal axis, the spool fluidly separating the internal cavity into a reference cavity and an inlet cavity, the inlet cavity communicating with the inlet, the reference cavity communicating with the reference inlet, the spool sealingly engaged to the peripheral wall of the housing on both of opposite sides of the outlet within both of the inlet cavity and the reference cavity, the spool defining one or more apertures and having: a closed position in which the spool blocks fluid communication between the inlet and the outlet, and an open position in which the spool fluidly connects the inlet to the outlet through the one or more apertures; and a biasing member biasing the spool to the closed position.

The aircraft engine described above may include any of the following features, in any combinations.

In some embodiments, the housing includes a sleeve, the peripheral wall defined by the sleeve, the spool sealingly engaged to the sleeve.

In some embodiments, the sleeve defines one or more sleeve aperture aligned with the outlet.

In some embodiments, the second end of the housing is defined by a cap removably secured to the peripheral wall of the housing.

In some embodiments, an adjustment member is threadingly engaged to the peripheral wall of the housing and movable relative to the housing to vary a biasing force generated by the biasing member.

In some embodiments, the cap has an anti-rotation feature for preventing rotation of the adjustment member once the cap is mounted to the peripheral wall.

In some embodiments, the adjustment member has an aperture receiving a stem protruding from the cap, the anti-rotation feature defined by an inner face extending around the aperture and an outer face of the stem contacting each other and being non-cylindrical.

In some embodiments, the inner face is shaped as a double-hexagon and the outer face is shaped as an hexagon.

In some embodiments, the biasing member is a spring located in the reference cavity.

### DESCRIPTION OF THE DRAWINGS

Reference is now made to the accompanying figures in which:
Fig. 1 is a schematic cross sectional view of an aircraft engine depicted as a gas turbine engine;
Fig. 2 is a schematic view of an oil system for the gas turbine engine of Fig. 1;
Fig. 3A is a cut-away view of a valve of the oil system in accordance with one embodiment, the valve shown in a closed configuration;
Fig. 3B is a cut-away of the valve of Fig. 3A shown in an open configuration;
Fig. 4 is a three dimensional exploded view of the valve of Fig. 3A;
Fig. 5 is a cut-away view of a spool of the valve of Fig. 3A;
Fig. 6 is a top view of valve of Fig. 3A;
Fig. 7 is an enlarged view of a portion of Fig. 3A;
Fig. 8 is a three dimensional view of a spool in accordance with another embodiment;
Fig. 9 is a three dimensional view of a spool in accordance with another embodiment;
Fig. 10 is a cut-away view of a valve in accordance with another embodiment;
Fig. 11 is a three dimensional view of a spool and sleeve of the valve of Fig. 10;
Fig. 12 is a cut-away view of a valve in accordance with another embodiment; and
Fig. 13 is a top three dimensional view of the valve of Fig. 12.

### DETAILED DESCRIPTION

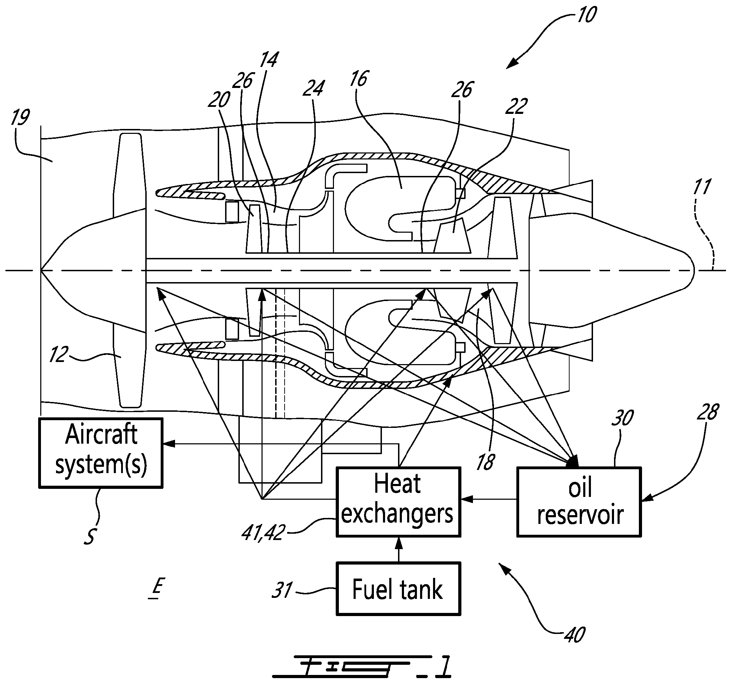

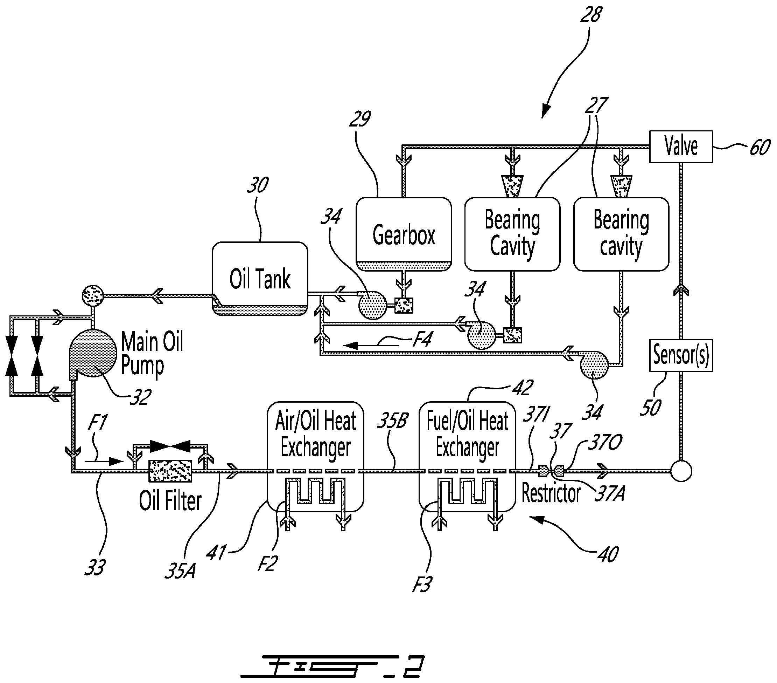

Fig. 1 illustrated an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. More specifically, the gas turbine engine 10 has a core gas path including an intake 19 for receiving air. The compressor section 14 has at least one compressor 20 extending across the core gas path and the turbine section 18 has at least one turbine 22 extending across the core gas path, with the at least one compressor 20 and the at least one turbine 22 being rotatable with a rotary shaft 24 supported within the gas turbine engine 10 by bearings 26. The bearings 26 may be contained within bearing cavities 27 (Fig. 2) that may be hydraulically connected to an oil source to receive oil for lubrication. An oil system 28 is provided for circulating oil to the bearings 26 and back to an oil reservoir 30. It will be appreciated that the principles of the disclosure apply to any aircraft engines, such as internal combustion engines (e.g., piston engine, rotary engine), any type of gas turbine engines, (e.g., turbofan, turboshaft, and turboprop), and auxiliary power unit.

In the embodiment shown, the gas turbine engine 10 has a heat exchange system 40 that is used to exchange heat between different fluids for proper operation of the gas turbine engine 10. In the present case, the heat exchange system 40 includes a first heat exchanger 41, which may be referred to as a air-cooled oil cooler (ACOC), which is used to transfer heat from the oil to an environment E outside the gas turbine engine 10. The heat exchange system 40 further includes a second heat exchanger 42, which may be referred to as a fuel-oil heat exchanger (FOHE), used for transferring heat from the oil of the oil system 28 to fuel flowing from a fuel reservoir 31, or any other fuel source, to the combustor 16 of the gas turbine engine 10 for combustion. Pre-heating the fuel as such may increase efficiency of the combustion of the fuel and may cool down the oil that heats up while lubricating the bearings 26. In some cases, the first heat exchanger 41 may be used to transfer or extract heat to/from an aircraft system S in need.

Referring to Fig. 2, the oil system 28 and the heat exchange system 40 are shown in greater detail. The oil system 28 includes an oil pump 32 that drives an oil flow F1 within an oil conduit 33 from the oil reservoir 30. The oil system 28 may be a pressure regulated system in which a pressure regulating valve may be connected in parallel to the oil pump 32. The oil flow F1 exchanges heat with an airflow F2 through the first heat exchanger 41 and exchanges heat with a fuel flow F3 through the second heat exchanger 42. The oil flow F1 is then distributed between different components in need of oil. These components may include, for instance, one or more bearing cavity(ies) 27 and/or a gearbox 29 in some embodiments. Used oil is then scavenged and scavenge pumps 34 drive a scavenge oil flow F4 from scavenge outlets of the bearing cavities 27 and the gearbox 29 back to the oil reservoir 30 where the oil may be flown back to the oil pump 32. A de-oiler and/or de-aerator may be used to remove air from the scavenge oil flow F4.

Still referring to Fig. 2, typically, the bearing cavities 27 are pressurized with compressed air from the compressor section 14 of the gas turbine engine 10. Put differently, compressed air is injected around the bearing cavities 27 such that a flow of air penetrates said cavities to prevent leakage of oil. However, during starting of the gas turbine engine 10, a pressure of the air may be insufficient to prevent oil from leaking out of the bearing cavities 27. Therefore, a valve 60 is disposed upstream of the bearing cavities 27 and used to selectively allow or prevent oil from flowing towards the bearing cavities 27. This valve 60 may be configured to allow the oil to flow towards the bearing cavities 27 only when the pressure of the air reaches a given pressure threshold. The pressure threshold may correspond to the pressure of the air being greater than that of the oil flowing in the oil system 28 to limit oil leakage. The valve 60 may be configured to allow the oil to flow towards the bearing cavities 27 when the oil pressure reaches a given pressure threshold. The pressure threshold may correspond to the pressure of the compressed air surrounding the bearing cavities being greater than that of the oil flowing in the oil system 28 to limit oil leakage.

Some valves used for this function may be subjected to a force imbalance on a valve member. This force imbalance may cause the valve member to jam in a valve housing. This may be undesirable. The valve 60 of the present disclosure may at least partially alleviate this drawback.

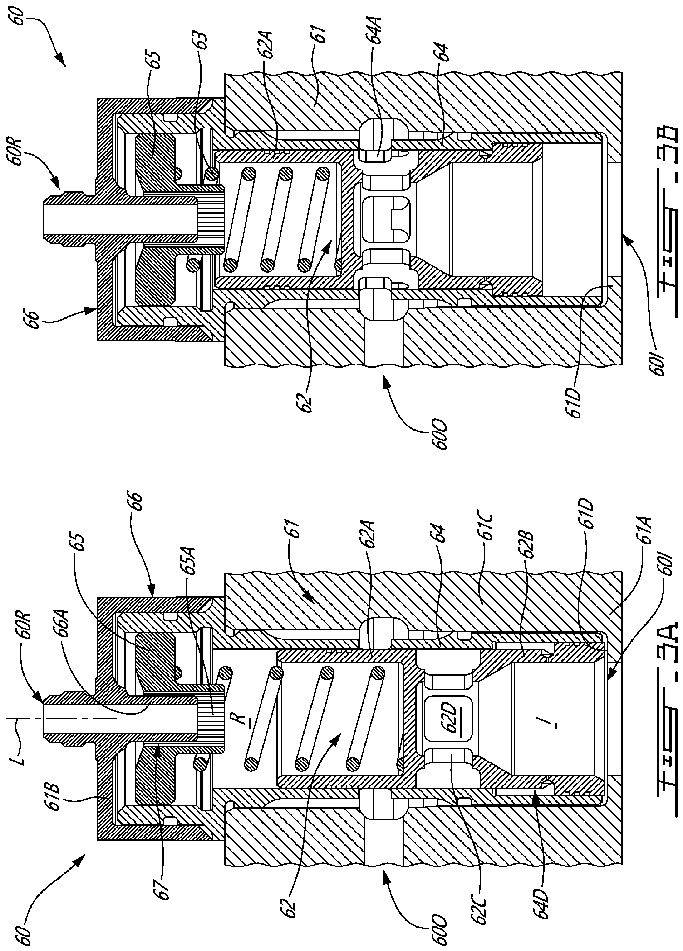

Referring now to Figs. 3A and 3B, the valve 60 is shown in a closed configuration in Fig. 3A and in an open configuration in Fig. 3B.

The valve 60 has a housing 61 having first and second end walls 61A, 61B located respectively at a first end and a second end of the housing 61, and a peripheral wall 61C extending between the first and second end walls 61A, 61B. The housing 61 defining an internal cavity circumscribed by the peripheral wall 61C and extending along a longitudinal axis L between the first end and the second end. The valve 60 has an inlet 60I located at or proximate the first end wall 61A. The inlet 60I communicates with the internal cavity. The valve 60 further has an outlet 600 defined through the peripheral wall 61C at a location intermediate between the first end and the second end. The outlet 600 communicates with the internal cavity. The inlet 60I may be located at any location between the first end and the outlet 600. The inlet 60I may be intersected by the longitudinal axis L. The inlet 60I may be coincident with the longitudinal axis L.

The valve 60 includes a spool 62 movably received within the internal cavity for reciprocating movement along the longitudinal axis L. The spool 62 fluidly separates the internal cavity into a reference cavity R and an inlet cavity I. The spool 62 is configured for selectively blocking fluid communication between the inlet 60I and the outlet 600. The spool 62 is movable along the longitudinal axis L of the valve 60. The longitudinal axis L intersects both of the first and second end walls 61A, 61B. The peripheral wall 61C extends around the longitudinal axis L.

The inlet cavity I communicates with the inlet 60I of the valve 60 whereas the reference cavity R is fluidly connected with a source of a fluid being at a reference pressure. In the embodiment shown, the valve 60 includes a reference inlet 60R that is fluidly connected with the compressor section of the gas turbine engine 10. More detail about this feature are presented below.

The spool 62 is sealingly engaged to the peripheral wall 61C of the housing 61 on both of opposite sides of the outlet 600. More specifically, the spool 62 has a valving section 62A sealingly engaged to the peripheral wall 61C between the outlet 600 and the second end wall 61B, a guiding section 62B sealingly engaged to the peripheral wall 61C between the outlet 600 and the first end wall 61A, and an apertured section 62C between the guiding section 62B and the valving section 62A. The apertured section 62C defines one or more apertures 62D, a plurality of apertures circumferentially distributed around the longitudinal axis L in this configuration. In other words, the valving section is sealingly engaged to the peripheral wall between the outlet and the second end, and the guiding section is sealingly engaged to the peripheral wall between the outlet and the first end.

The spool 62 is movable along the longitudinal axis L while remaining in sealing engagement with the peripheral wall 61C of the housing 61. As shown, the spool 62 may have a cylindrical shape and grooves at an outer face thereof. The grooves may act as a balancing feature. The spool 62 moves in reaction to a pressure difference it is subjected to between a pressure of the fluid in the reference cavity R and a pressure of oil in the inlet cavity I. More specifically, the spool 62 has a closed position shown in Fig. 3A in which the valving section 62A overlaps the outlet 600 and in which the spool 62 blocks fluid communication between the inlet 60I and the outlet 600, and an open position shown in Fig. 3B in which the valving section 62A is offset from the outlet 600 and in which the inlet 60I is fluidly connected to the outlet 600 through the one or more apertures 62D of the apertured section 62C of the spool 62.

The valve 60 further includes a biasing member 63 shown in Fig. 3. The biasing member 63 biases the spool 62 to the closed position. The biasing member 63 may be engaged to both of the spool 62 and the housing 61. In this embodiment, the biasing member 63 pushes the spool 62 away from the second end wall 61B. The biasing member 63 may be located at any other suitable location. The biasing member 63 may be a spring, or any other suitable one or more components providing the biasing functionality described herein. In some embodiments, it may be an elastomer attached to both of the spool 62 and the first end wall 61A and configured for pulling the spool 62 to the closed position.

As illustrated in Fig. 3B, when the spool 62 is in the open position, the valving section 62A becomes subjected to a pressure exerted circumferentially all around its outer surface. However, this pressure may be non-axisymmetric because the outlet 600 is located at a single circumferential location. In some embodiments, this may cause jamming of valving members of some valve. However, in this embodiment, the guiding section 62B of the spool 62 remains sealingly engaged to the peripheral wall 61C between the outlet 600 and the first end wall 61A. The guiding section 62B may thus contribute in maintaining the spool 62 centered within the housing 61 thereby limiting instances of movements of the spool 62 being impeded by the pressure imbalance exerted on it.

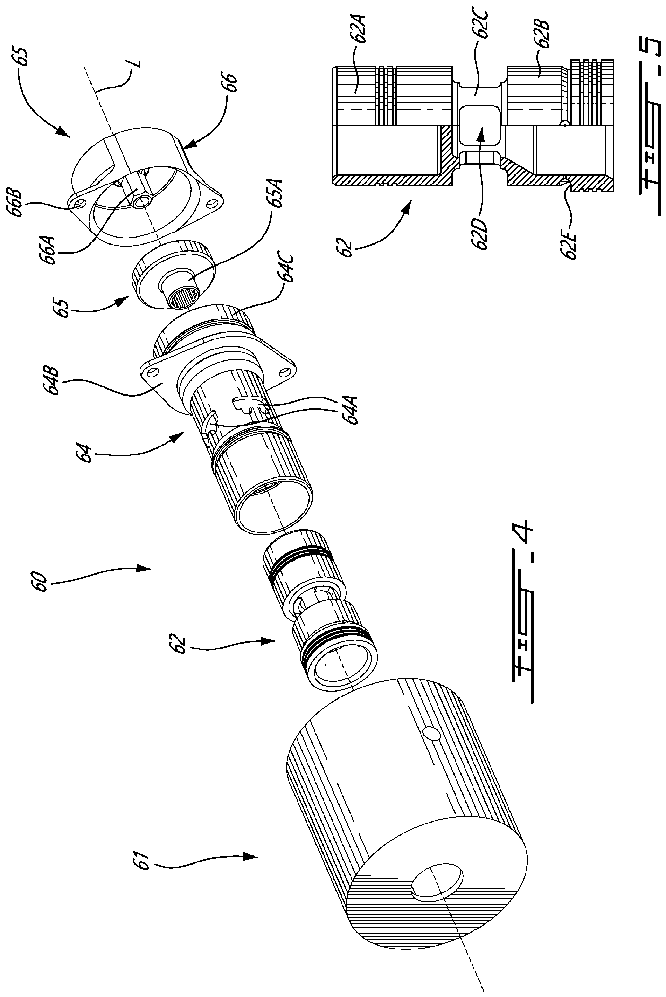

Referring to Figs. 3A and 4, in some embodiments, the housing 61 includes a sleeve 64. A sealing member may be provided between the spool 62 and the sleeve 64. The sleeve 64 may define the peripheral wall 61C of the housing 61. The spool 62 is sealingly engaged to the sleeve 64. The sleeve 64 defines sleeve apertures 64A therethrough. These sleeve apertures 64A are circumferentially distributed around the longitudinal axis L and communicate with the outlet 600 of the valve 60. The sleeve apertures 64A may include a single aperture in some embodiments. In this embodiment, the sleeve aperture 64A are aligned with the outlet 600 of the valve 60. The shape of the sleeve apertures 64A may minimize a force balance difference when the spool 62 moves progressively towards the fully open position. The shape may cause the force balance to change smoothly to mitigate dynamic effects. The sleeve 64 defines a flange 64B and a threaded wall 64C protruding from the flange 64B. The threaded wall 64C defines inner threads.

As depicted in Fig. 3A, the sleeve 64 has an outer diameter made larger than an inner diameter of the housing 61 at the inlet 60I of the valve 60, hence avoiding mis-installation of the spool 62. This difference in diameters creates a spool axial stop 61D against which the spool 62 abuts as shown in Fig. 3A.

The valve 60 may further include an adjustment member 65 for adjusting a biasing force generated by the biasing member 63. In some embodiments, the adjustment member 65 is a nut threadingly engaged to the peripheral wall 61C of the housing 61. In this embodiment, the adjustment member 65 is threadingly engaged to the threaded wall 64C of the sleeve 64, which is part of the housing 61. As seen more distinctly on Fig. 3B, rotation of the adjustment member 65 relative to the sleeve 64 causes the adjustment member 65 to move up and down along the longitudinal axis L thereby varying a length of a space that receives the biasing member 63. For instance, moving the adjustment member 65 towards the first end wall 61A of the housing 61 compresses the biasing member 63 thereby increasing a pressure of the fluid received via the inlet 60I required for moving the spool 62 to open the valve 60.

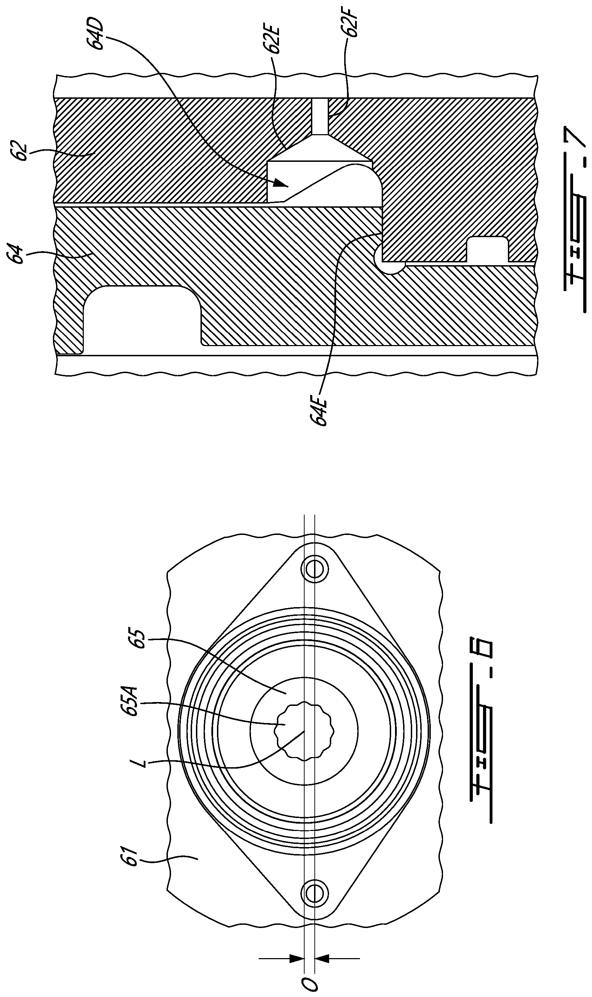

In some embodiments, the housing 61 may be opened to access inner components thereof. The housing 61 may include a cap 66 for closing the internal volume of the valve 60. The cap 66 may thus define the second end wall 61B of the housing 61 of the valve 60. The reference inlet 60R may be defined through the cap 66. The cap 66 may have an anti-rotation feature 67 for preventing the adjustment member 65 from rotating during use of the valve 60. The anti-rotation feature 67 is provided by the cap 66 having a stem 66A protruding from an end wall of the cap 66 inwardly into the internal volume of the housing 61. In this embodiment, the stem 66A is hollow and defines an inner conduit that communicates with the reference inlet 60R, but other configurations are contemplated. The adjustment member 65 has an aperture 65A that receives the stem 66A. The anti-rotation feature 67 is defined by an inner face extending around the aperture 65A of the adjustment member 65 and an outer face of the stem 66A contacting each other and being non-cylindrical. As shown in Fig. 6, the inner face of the aperture 65A has a double-hexagonal shape whereas, as shown in Fig. 4, the outer face of the stem 66A has a hexagonal shape. Therefore, engagement of the stem 66A into the aperture 65A of the adjustment member 65 prevents rotation of the adjustment member 65 relative to the cap 66. The double and single hexagonal faces permits to double the possible positions at which the adjustment member 65 may be positioned relative to the cap 66. Any non-cylindrical faces may be used, such as oval, square, triangular, double square, etc.

As shown in Fig. 4, the cap 66 defines a cap flange 66B that cooperates with the flange 64B of the sleeve 64 to secure the cap 66 and the sleeve 64 to the housing 61. These flanges define registering apertures via which fasteners may be inserted and threadingly engaged to apertures defined in the peripheral wall 61C of the housing 61. In an alternate embodiment, the housing 61 may define a third flange and fasteners may extend through registering apertures defined through the three flanges.

Referring now to Figs. 5 and 7, the spool 62 includes a circumferential undercut 62E to connect damper feeds together and to prevent accumulation of trapped fluid on one side of the spool 62. The circumferential undercut 62E communicates with a passage 62F that extends through the spool 62 and that communicates with the internal volume of the housing 61. Therefore, the circumferential undercut 62E and passage 62F permits the oil from flowing radially inwardly relative to the longitudinal axis L through the spool 62. As shown in Fig. 7, the circumferential undercut 62E is arranged such as to maintain a non-zero damping cavity volume by maintaining the passage 62F in fluid communication with both of a damping cavity 64D and the inlet 60I of the valve 60 when the spool 62 is in the fully open position (Fig. 3B) to minimize the force balance discontinuity as the valve 60 is closed to and immediately after contacting an axial stopper 64E defined by the sleeve 64. The axial stopper may be a shoulder facing the inlet 60I of the valve 60.

As shown in Fig. 6, there is a radial offset O between the longitudinal axis L of the valve 60 and a line interconnecting the apertures defined through both the flange 64B of the sleeve 64 and the cap flange 66B of the cap 66. This radial offset O may be a mistake-proofing feature preventing mistake when assembling the valve 60.

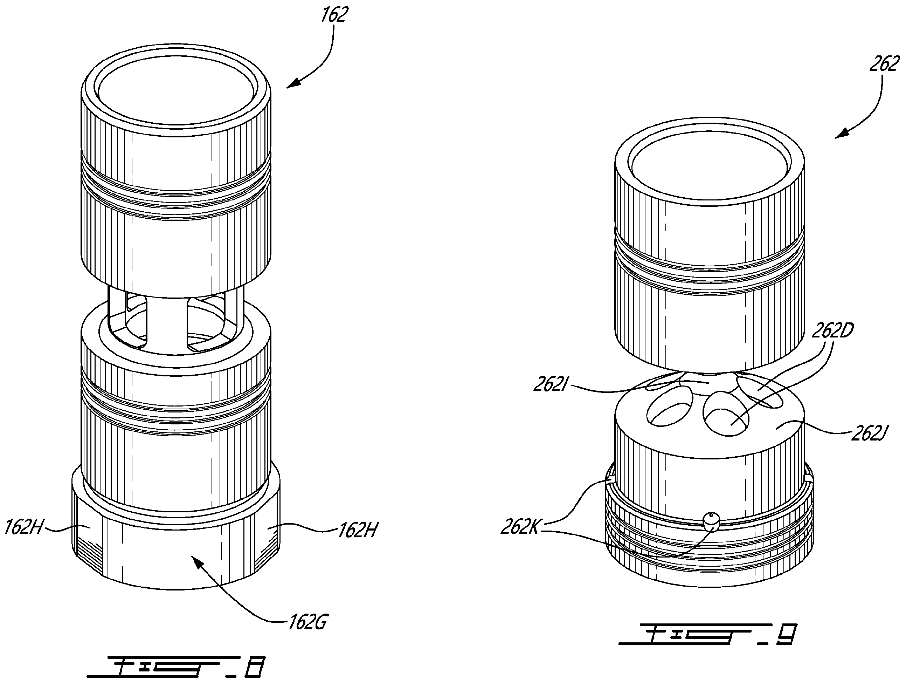

Referring now to Fig. 8, another embodiment of a spool is shown at 162. For the sake of conciseness, only features differing from the spool 62 of Fig. 3A are described below.

The spool 162 has a lower section 162G that engages the sleeve 64. The lower section 162G defines one or more cut-outs 162H extending axially relative to the longitudinal axis L. These cut-outs 162H are configured to allow the fluid to flow in and out of the damping cavity defined between the sleeve 64 and the spool 162.

Referring now to Fig. 9, another embodiment of a spool is shown at 262. For the sake of conciseness, only features differing from the spool 62 of Fig. 3A are described below.

In this embodiment, the spool 262 has a stem 2621 that connects two sections of the spool 262 together. Apertures 262D are defined through a wall 262J of a lower one of the two sections; the lower section being located between the inlet 60I of and the outlet 600 of the valve 60. In this configuration, the spool 262 may be devoid of an undercut, but fluid communication between the damping cavity and the inlet 60I of the valve may be maintained with feed holes 262K extending through the spool 262. A plurality of feed holes 262K may be distributed around the longitudinal axis L.

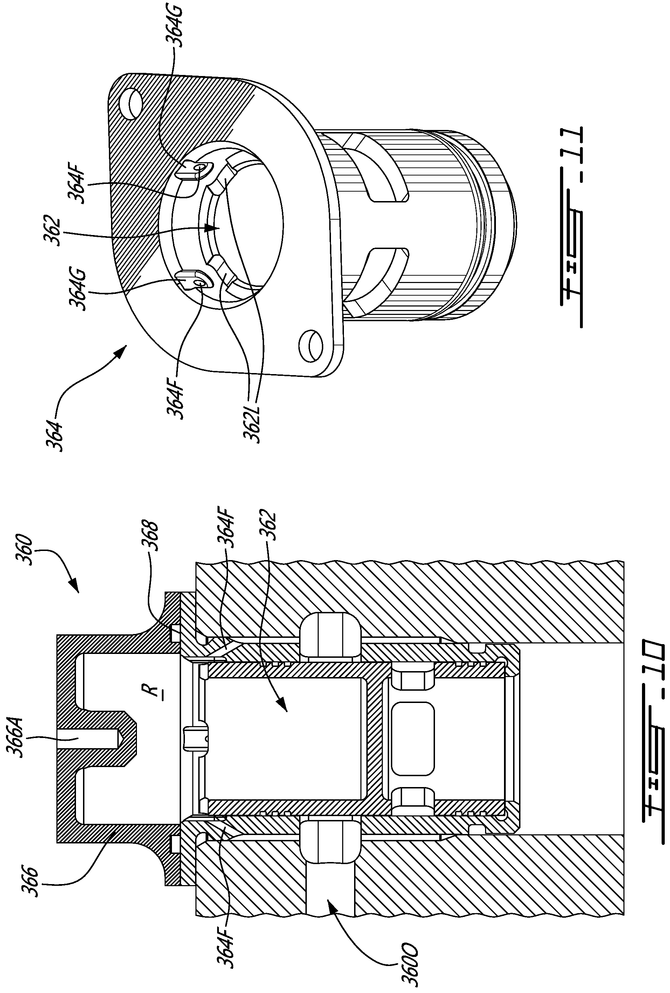

Referring to Figs. 10-11, another embodiment of a valve is shown at 360. For the sake of conciseness, only features different from the valve 60 described above are described below.

The valve 360 may be referred to as a self-referenced valve as it is devoid of a reference inlet. That is, the valve 360 has a single inlet and a single outlet. The cap 366 has a higher height compared to the cap 66 of Fig. 3A and defines an axial stop for the spool 362. The cap 366 may have inner threads 366A for securing an external fitting. A face seal 368 is used for sealing the cap 366 to the sleeve 364. Mistake proofing for spool orientation is achieved by uneven position of the separator between ends of the spool 362 such that the biasing member (not shown) preload cannot be achieved with the spool 362 in the wrong orientation. This configuration may be devoid of an intermediate cavity and devoid of a damping cavity. The sleeve 364 defines an axial stop proximate the inlet of the valve.

As aforementioned, the valve 360 is self-referenced in that it includes one or more flow passages 364F in the form of apertures extending through the sleeve 364. The flow passages 364F fluidly connects the outlet 3600 of the valve 360 to the reference cavity R. The spool 362 may define notches 362L circumferentially aligned with the flow passages 364F to permit fluid communication between the reference cavity R and the outlet 3600 of the valve 360. Recesses 364G may be defined by the sleeve 364; the flow passages 364F opening to the recesses 364G. These notches 362L and recesses 364G may facilitate fluid communication between the reference cavity R and the outlet 3600 of the valve 360.

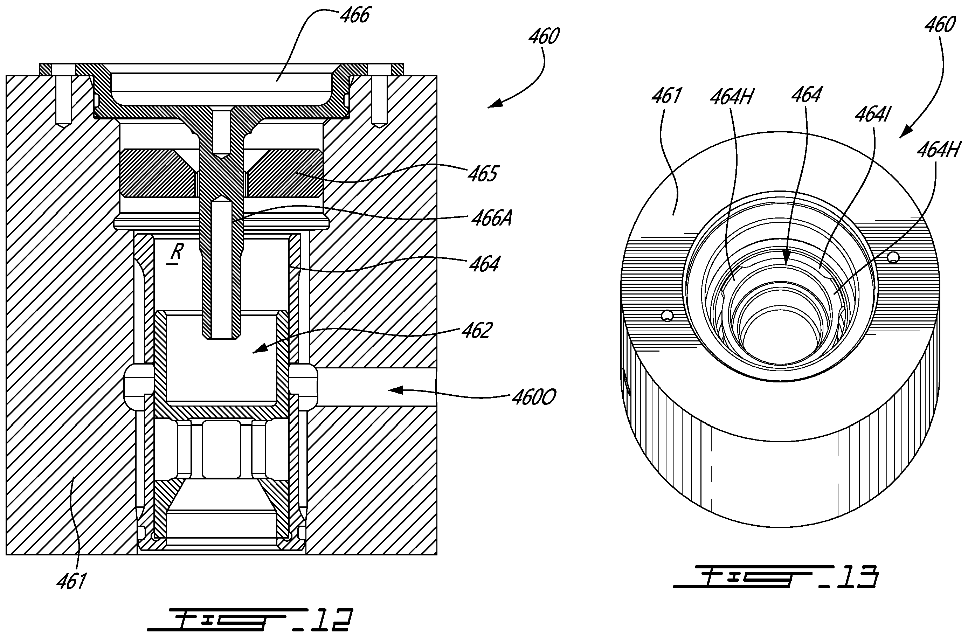

Referring to Figs. 12-13, another embodiment of a valve is shown at 460. For the sake of conciseness, only features different from the valve 60 described above are described below.

In this embodiment, the cap 466 is mounted directly to the housing 461 and defines a stem 466A that is used for an axial stop of the spool 462. The adjustment member 465 is threadingly engaged to inner threads defined by the housing 461. The sleeve 464 defines legs 464H and slots 4641 interspaced therebetween. These slots 4641 permits fluid communication between the outlet 4600 of the valve 460 and the reference cavity R since the valve 460 is also a self-referenced valve.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A valve (60; 360; 460) for a fluid system of an aircraft engine, comprising:
a housing (61; 461) defining an internal cavity circumscribed by a peripheral wall (61C) extending along a longitudinal axis (L) between a first end (61A) and a second end (61B), the internal cavity having an outlet (600; 3600; 4600) extending through the peripheral wall (61C) at a location intermediate between the first end (61A) and the second end (61B), and an inlet (601) at a location between the first end (61A) and the outlet (600; 3600; 4600);
a spool (62; 162; 262; 362; 462) movably received within the internal cavity for reciprocating movement along the longitudinal axis (L), the spool (62...462) having a valving section (62A) sealingly engaged to the peripheral wall (61C) between the outlet (600; 3600; 4600) and the second end (61B), a guiding section (62B) sealingly engaged to the peripheral wall (61C) between the outlet (600; 3600; 4600) and the first end (61A), and an apertured section (62C) between the guiding section (62B) and the valving section (62A), the apertured section (62C) defining one or more apertures (62D), the spool (62...462) moveable between:
a closed position in which the valving section (62A) overlaps the outlet (600; 3600; 4600) and in which the spool (62...462) blocks fluid communication between the inlet (601) and the outlet (600; 3600; 4600), and
an open position in which the valving section (62A) is offset from the outlet (600; 3600; 4600) and in which the inlet (601) is fluidly connected to the outlet (600; 3600; 4600) through the one or more apertures (62D) of the apertured section (62C) of the spool (62...462); and
a biasing member (63) biasing the spool (62...462) to the closed position.

2. The valve (60; 360; 460) of claim 1, wherein the housing (61; 461) includes a sleeve (64; 364; 464), the peripheral wall (61C) defined by the sleeve (64...464), the spool (62...462) sealingly engaged to the sleeve (64...464).

3. The valve (60; 360; 460) of claim 2, wherein the sleeve (64...464) defines one or more sleeve apertures (64A) aligned with the outlet (600; 3600; 4600).

4. The valve (60; 360; 460) of any of the preceding claims, wherein a cap (66; 366; 466) is removably secured to the peripheral wall (61C) of the housing (61; 461) at the second end (61B) of the internal cavity.

5. The valve (60; 360; 460) of claim 4, comprising an adjustment member (65; 465) threadingly engaged to the peripheral wall (61C) of the housing (61; 461) and movable relative to the housing (61; 461) to vary a biasing force generated by the biasing member (63).

6. The valve (60; 360; 460) of claim 5, wherein the cap (66; 366; 466) has an anti-rotation feature (67) for preventing rotation of the adjustment member (65; 465) once the cap (66; 366; 466) is mounted to the peripheral wall (61C).

7. The valve (60; 360; 460) of claim 6, wherein the adjustment member (65; 465) has an aperture (65A) receiving a stem (66A; 466A) protruding from the cap (66; 366; 466), the anti-rotation feature (67) defined by an inner face extending around the aperture (65A) and an outer face of the stem (66A; 466A) contacting each other and being non-cylindrical.

8. The valve (60; 360; 460) of claim 7, wherein the inner face is shaped as a double-hexagon and the outer face is shaped as an hexagon.

9. The valve (60; 360; 460) of any of the preceding claims, wherein the spool (62...462) divides the internal cavity into a reference cavity (R) between the outlet (600; 3600; 4600) and the second end (61B) and an inlet cavity (I) between the inlet (601) and the outlet (600; 3600; 4600), the reference cavity (R) fluidly connectable to a source of the fluid being at a reference pressure.

10. The valve (360; 460) of claim 9, wherein the reference cavity (R) is fluidly connected to the outlet (3600; 4600) via flow passages (364F) defined by the housing (61; 461).

11. The valve (360; 460) of claim 10, wherein the flow passages (364F) are defined either through a sleeve (364; 464) mounted to the peripheral wall (61C) or via slots (4641) interspaced between legs (464H) of the sleeve (464).

12. The valve (60; 360; 460) of claim 9, wherein the reference cavity (R) is fluidly connected to the source of the fluid via a reference inlet (60R) defined by the housing (61; 461).

13. The valve (60; 360; 460) of any of claims 9 to 12, wherein the biasing member (63) is a spring located in the reference cavity (R).

14. An aircraft engine (10), comprising:
a compressor section (14);
an oil system (28) having an oil source fluidly connectable to a component, the component fluidly connected to the compressor section (14); and
a valve (60; 360; 460) as defined in any one of claims 1 to 13, the valve (60; 360; 460) operable for selectively fluidly connecting the oil source to the component.
